# EUROPEAN PATENT APPLICATION

(11) **EP 4 173 731 A1**
(43) Date of publication of application: **03.05.2023**
(21) Application number: 21833405.0
(22) Date of filing: 23.06.2021
(51) Int. Cl.: B07C 5/342, B25J 13/08, B65G 47/90, G06T 7/00

(54) **INFORMATION PROCESSING DEVICE, SORTING SYSTEM, AND PROGRAM**

(30) Priority: 29.06.2020 JP 2020112017
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: TORII, Moriaki, Kawasaki-shi, Kanagawa 212-0013 (JP); AKAGI, Takuma, Kawasaki-shi, Kanagawa 212-0013 (JP); OHKAWA, Yasuhiro, Kawasaki-shi, Kanagawa 212-0013 (JP)
(74) Representative: Horn Kleimann Waitzhofer Patentanwälte PartG mbB
(86) International application number: PCT/JP2021/023807
(87) International publication number: WO 2022/004525

(57) **Abstract**

An information processing device includes a connection unit, a recognition control unit, and an output unit. The connection unit connects to an imaging device. The imaging device images a region on which an object to be handled by using a load handling device is placed. The recognition control unit acquires image information about the region via the connection unit, detects, from the image information, an identification region in which identification information attached to the object is included, and recognizes the identification information in the identification region. The output unit outputs region information related to the identification region detected by the recognition control unit and the identification information recognized by the recognition control unit.

## Description

### TECHNICAL FIELD

Embodiments of the present invention relate to an information processing device, a sorting system, and a program.

### BACKGROUND ART

A system for sorting packages such as letters, documents, and parcels into destinations or others by using a robot arm has been used in a work in postal and parcel delivery services and so forth.

### CITATION LIST

### Patent Literature

Patent Document 1: JP 2019-150904 A

### SUMMARY OF INVENTION

### Problem to be Solved by the Invention

In such a system as described above, processing of recognizing the shape of the package may be performed when the robot arm performs a holding operation for holding a package. In such a case, if the shape of the package is irregular or if multiple packages are randomly stacked, it is difficult to accurately recognize the shape of each package, and there is a possibility that the holding operation is not appropriately performed.

Considering the above, one of the objects of the embodiment is to provide an information processing device, a sorting system, and a program capable of implementing an appropriate holding operation regardless of the shape of a package.

### Means for Solving Problem

An information processing device according to an embodiment includes a connection unit, a recognition control unit, and an output unit. The connection unit is configured to connect to an imaging device. The imaging device images a region on which an object to be handled by using a load handling device is placed. The recognition control unit is configured to acquire image information about the region via the connection unit, detect, from the image information, an identification region in which identification information attached to the object is included, and recognize the identification information in the identification region. The output unit is configured to output region information related to the identification region detected by the recognition control unit and the identification information recognized by the recognition control unit.

### BRIEF DESCRIPTION OF DRAWINGS

FIG. 1 is a diagram illustrating an example of a configuration of a sorting system according to an embodiment;
FIG. 2 is a diagram illustrating an example of a box image according to the embodiment;
FIG. 3 is a block diagram illustrating an example of a hardware configuration of a control device according to the embodiment;
FIG. 4 is a block diagram illustrating an example of a functional configuration of the control device according to the embodiment;
FIG. 5 is a block diagram illustrating an example of a specific functional configuration of a recognition processing unit according to the embodiment;
FIG. 6 is a block diagram illustrating an example of a specific functional configuration of a placement control unit according to the embodiment;
FIG. 7 is a block diagram illustrating an example of a specific functional configuration of a holding control unit according to the embodiment;
FIG. 8 is a diagram illustrating a first example of an identification region according to the embodiment;
FIG. 9 is a diagram illustrating a second example of the identification region according to the embodiment;
FIG. 10 is a diagram illustrating a first example of a holding position according to the embodiment;
FIG. 11 is a diagram illustrating a second example of the holding position according to the embodiment;
FIG. 12 is a block diagram illustrating an example of a specific functional configuration of an operation information generation unit according to the embodiment;
FIG. 13 is a sequence diagram illustrating an example of a processing flow in the control device according to the embodiment; and
FIG. 14 is a flowchart illustrating an example of a processing flow in the sorting system according to the embodiment.

### DESCRIPTION OF EMBODIMENTS

Some embodiments and modifications of the present disclosure will be described below on the basis of the drawings. The configurations of the embodiments and modifications described below, and the actions and effects brought about by the configurations are merely examples and are not limited to the following descriptions.

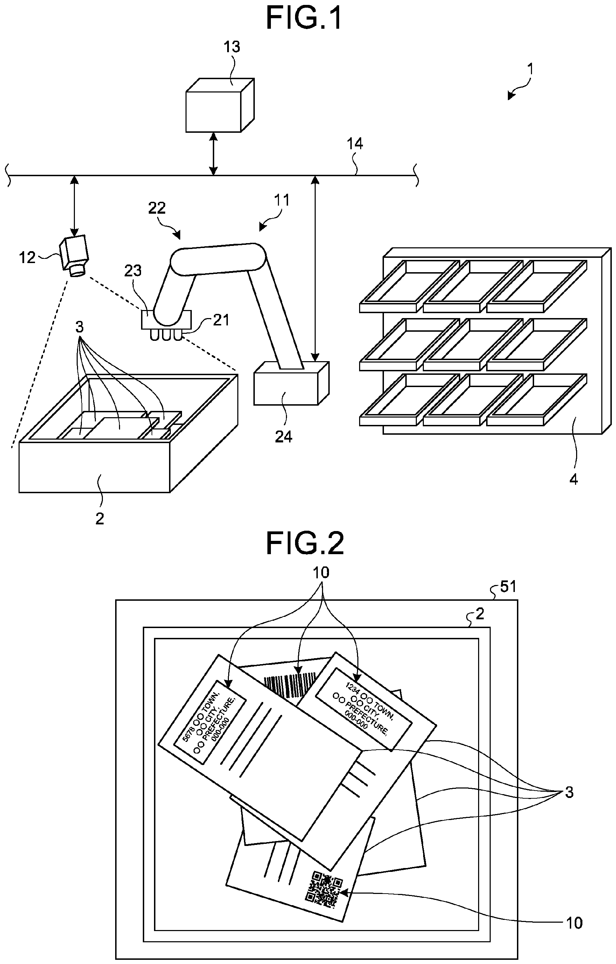

FIG. 1 is a diagram illustrating an example of a configuration of a sorting system 1 according to an embodiment. The sorting system 1 is a system that sorts packages 3 (objects) stacked in a box 2 into predetermined sorting destinations.

The box 2 is a container that contains the packages 3 to be sorted. Note that the box 2 is an example of means for storing the packages 3. A load-carrying platform, a pallet, a cage carriage, and so forth may be used instead of the box 2. A sorting pocket 4 is a sorting destination of the package 3 and is partitioned on the basis of a predetermined criterion (for example, a destination of the package 3).

The sorting system 1 includes a robot arm 11 (load handling device), a camera 12 (imaging device), and a control device 13 (information processing device). The robot arm 11, the camera 12, and the control device 13 are configured to be able to communicate with each other via a network 14. Although the specific configuration of the network 14 should not be limited, the network 14 may be, for example, a local area network (LAN) or a cloud system.

The configuration of the robot arm 11 will be described. The robot arm 11 is an apparatus that holds the package 3 stored in the box 2, lifts the held package 3, and moves the package 3 to the sorting pocket 4 which is a sorting destination. The robot arm 11 includes a holding mechanism 21, an arm mechanism 22, a contact sensor 23, and a drive control mechanism 24.

The holding mechanism 21 is a mechanism that holds the package 3. The holding mechanism 21 according to the present embodiment includes a suction pad that sucks the package 3. The suction pad sucks and holds the package 3 by making the internal space negative pressure in a state of being in contact with the surface of the package 3. The suction pad is controlled by a control signal from the drive control mechanism 24. Note that the configuration of the holding mechanism 21 is not limited thereto, and may be, for example, a configuration using a grappa that grips the package 3 by pinching the package 3 with finger-like members.

The arm mechanism 22 is a mechanism that moves the holding mechanism 21. The arm mechanism 22 includes arms and a joint mechanism that connects the arms. The joint mechanism incorporates an actuator which is controlled by a control signal from the drive control mechanism 24.

The contact sensor 23 is a sensor that detects stress applied to the holding mechanism 21. The contact sensor 23 detects, for example, stress applied to the holding mechanism 21 in the vertical direction. The contact sensor 23 transmits a detection result to the drive control mechanism 24. Note that the contact sensor 23 may also detect stress applied to the arm mechanism 22.

The drive control mechanism 24 controls operations of the holding mechanism 21 and the arm mechanism 22 on the basis of the operation information output by the control device 13. The drive control mechanism 24 is configured by using, for example, a microprocessor, a memory, an application specific integrated circuit (ASIC), and so forth. The drive control mechanism 24 generates a control signal for controlling the holding mechanism 21 and the arm mechanism 22 in accordance with operation information supplied by the control device 13. The operation information includes: information for implementing a holding operation of holding the package 3 by the holding mechanism 21, and information for implementing a sorting operation of moving the held package 3 toward a sorting destination. The drive control mechanism 24 may be configured as a sequencer.

Next, the configuration of the camera 12 will be described. The camera 12 is an apparatus that acquires image information about the package 3 stored in the box 2. The camera 12 outputs the image information to the control device 13 via the network 14.

The camera 12 is, for example, a monocular camera configured by using a lens and an imaging element which converts light formed by the lens into an electric signal. Such a configuration allows the camera 12 to acquire image information constituting a raster image in which coordinates (pixels) having color information are two-dimensionally arranged. Note that the raster image may be a color image or a monochrome image.

The angle of view of the lens of the camera 12 is adjusted so as to image a region including the box 2 in which the package 3 is stored. For example, the optical axis of the lens of the camera 12 is adjusted to face the bottom surface of the box 2, in other words, adjusted to be parallel to the vertical direction. The camera 12 images a predetermined range including the box 2 in a direction facing the bottom surface of the box 2 and then acquires a raster image. An image in a predetermined range including the box 2 is hereinafter referred to as a box image.

FIG. 2 is a diagram illustrating an example of a box image 51 according to the embodiment. The box image 51 illustrated in FIG. 2 is a two-dimensional image obtained by imaging the inside of the box 2 from above. A state where plural packages 3 are randomly stacked in the box 2 is illustrated here. Identification information 10 to be described below is attached to each package 3.

The configuration of the control device 13 will now be described. The control device 13 creates operation information for controlling the operation of the robot arm 11 on the basis of the image information (box image 51) acquired by the camera 12. The control device 13 outputs the operation information to the drive control mechanism 24.

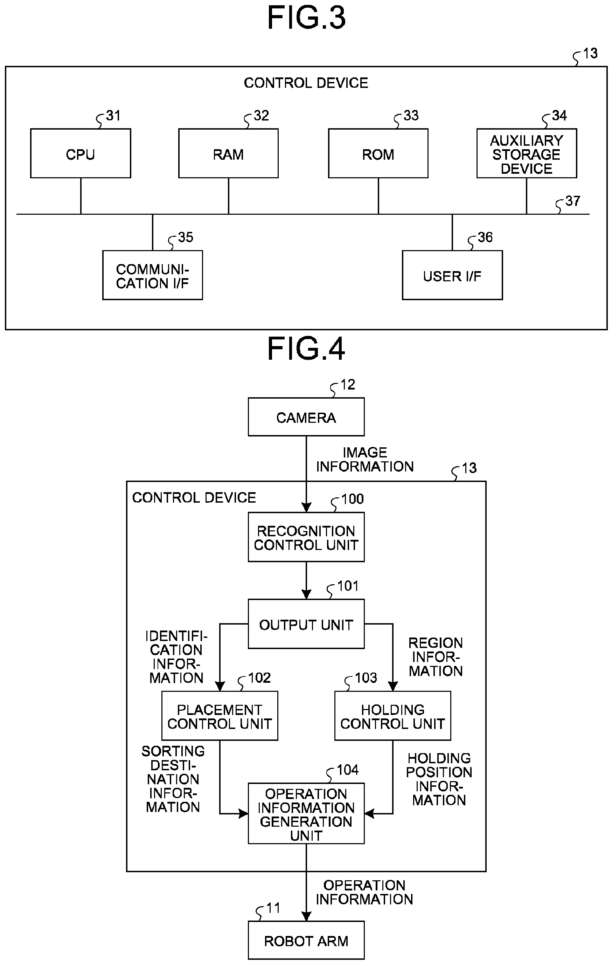

FIG. 3 is a block diagram illustrating an example of a hardware configuration of the control device 13 according to the embodiment. The control device 13 illustrated in FIG. 3 includes a central processing unit (CPU) 31, a random access memory (RAM) 32, a read only memory (ROM) 33, an auxiliary storage device 34, a communication interface (I/F) 35 (connection unit), a user I/F 36, and a bus 37.

The CPU 31 performs predetermined control arithmetic processing using the RAM 32 as a working area in accordance with computer programs stored in the ROM 33 and the auxiliary storage device 34. The auxiliary storage device 34 is a nonvolatile memory or the like. The auxiliary storage device 34 stores various kinds of data necessary for the CPU 31 to execute processing. The communication I/F 35 is a device that enables transmission and reception of information to and from external devices (the camera 12, the drive control mechanism 24, and so forth) via an appropriate computer network (the network 14 or the like). The user I/F 36 is a device that enables input and output of information between the control device 13 and a user, and is, for example, a keyboard, a mouse, a touch panel mechanism, a microphone, a display, a speaker, or the like. The CPU 31, the RAM 32, the ROM 33, the auxiliary storage device 34, the communication I/F 35, and the user I/F 36 are connected via the bus 37 so that they can communicate with each other.

FIG. 4 is a block diagram illustrating an example of a functional configuration of the control device 13 according to the embodiment. The control device 13 illustrated in FIG. 4 includes a recognition control unit 100, an output unit 101, a placement control unit 102, a holding control unit 103, and an operation information generation unit 104. These functional elements 100 to 104 are implemented by, for example, collaboration between the hardware configurations illustrated in FIG. 3 and the computer program. Note that these functional elements 100 to 104 may be configured by pieces of hardware which are physically separated.

The recognition control unit 100 acquires the image information (box image 51) acquired by the camera 12 via the connection unit (communication I/F 35 and so forth) connecting the control device 13 and the camera 12. The recognition control unit 100 detects, from the acquired image information, an identification region in which the identification information 10 attached to the package 3 is included, and generates region information related to the identification region. The recognition control unit 100 recognizes the identification information 10 in the detected identification region. The identification information 10 is information corresponding to a sorting destination of the package 3. The identification information 10 may be, for example, a character string, a barcode, or a two-dimensional code, each indicating a destination (a postal code, an address, or the like) or a transport destination (the sorting pocket 4 and so forth) of the package 3.

The output unit 101 outputs the identification information 10 recognized by the recognition control unit 100 to the placement control unit 102. The output unit 101 outputs, to the holding control unit 103, the region information related to the identification region detected by the recognition control unit 100.

The placement control unit 102 sets, on the basis of the identification information 10 output from the output unit 101, a sorting destination on which the package 3 held by the robot arm 11 is to be placed.

The holding control unit 103 sets, within the identification region, a holding position at which the holding mechanism 21 of the robot arm 11 holds the package 3, on the basis of the region information output from the output unit 101.

The operation information generation unit 104 generates operation information for controlling the operation of the robot arm 11, on the basis of the sorting destination information indicating the sorting destination set by the placement control unit 102 and the holding position information indicating the holding position set by the holding control unit 103.

As described above, according to the present embodiment, the holding position is set on the basis of the position of the identification information 10. Thus, an appropriate holding operation can be implemented without requiring information, which has difficulty in recognition, such as the shape of the package 3 itself or the position of the package 3 in a three-dimensional space.

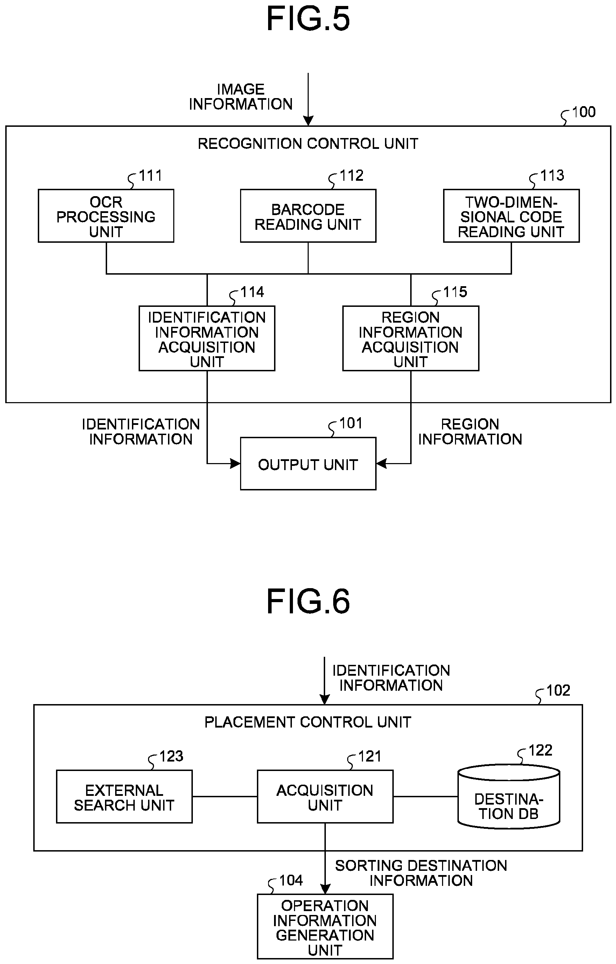

FIG. 5 is a block diagram illustrating an example of a specific functional configuration of the recognition control unit 100 according to the embodiment. The recognition control unit 100 illustrated in FIG. 5 includes an optical character recognition (OCR) processing unit 111, a barcode reading unit 112, a two-dimensional code reading unit 113, an identification information acquisition unit 114, and a region information acquisition unit 115.

The OCR processing unit 111 converts image data of a character string into text data (character code). The OCR processing unit 111 acquires, from the box image 51, text data indicating a destination and so forth written on the package 3. The OCR processing unit 111 performs image recognition processing by using a given parameter set. The parameter set refers to a set of parameters used for one or more processes included in the image recognition processing. The parameter set includes, for example, a threshold value for binarization processing and a threshold value for determining success/failure of character recognition. The parameter set may also include, for example, a threshold value used for processing red-green-blue (RGB) information when a color image is converted into a binary image. The threshold value used for processing the RGB information includes a threshold value for recognizing a frame line (background other than characters in an address entry field) colored by red, green, or the like, which is RGB information included in an image, or a threshold value for processing (erasing) the recognized frame line. The parameter set includes a threshold value for determining a contrast to be adjusted in accordance with a change in density of a printed or written character, a threshold value for determining a label size (a region in which an individual character is recognized in a character string) of an individual character included in an image, and others. The threshold value for determining the label size is a threshold value that is adjusted to appropriately recognize a character in a case where the character is blurred (the label size is large) or a part of the character disappears (the label size is small).

The barcode reading unit 112 reads a barcode attached to the package 3 from the box image 51 and acquires barcode data indicating the configuration of the barcode.

The two-dimensional code reading unit 113 reads a two-dimensional code attached to the package 3 from the box image 51 and acquires two-dimensional code data indicating the configuration of the two-dimensional code.

The identification information acquisition unit 114 outputs, to the output unit 101, the text data acquired by the OCR processing unit 111, the barcode data acquired by the barcode reading unit 112, or the two-dimensional code data acquired by the two-dimensional code reading unit 113.

The region information acquisition unit 115 acquires region information related to the identification region including the identification information 10, from the OCR processing unit 111, the barcode reading unit 112, or the two-dimensional code reading unit 113. The region information includes information indicating a position of an identification region in a region in which the package 3 is placed (in the present embodiment, a region inside the box 2). The region information may be acquired on the basis of, for example, coordinate information indicating a region (reading region) in the box image 51 read when the identification information 10 is detected. The region information acquisition unit 115 outputs the region information to the output unit 101.

Note that, in the above description, an example that the recognition control unit 100 includes the OCR processing unit 111, the barcode reading unit 112, and the two-dimensional code reading unit 113 is described, the configuration of the recognition control unit 100 is not limited thereto. The recognition control unit 100 may include at least one of these units in accordance with the type of the identification information 10 to be used.

FIG. 6 is a block diagram illustrating an example of a specific functional configuration of the placement control unit 102 according to the embodiment. The placement control unit 102 illustrated in FIG. 6 includes an acquisition unit 121, a destination data base (DB) 122, and an external search unit 123.

On the basis of the identification information 10 (text data, barcode data, or two-dimensional code data) output by the output unit 101, the acquisition unit 121 acquires sorting destination information indicating the sorting destination of the package 3 to which the identification information 10 has been attached. The acquisition unit 121 outputs the sorting destination information to the operation information generation unit 104.

The destination DB 122 holds data in which the identification information 10 and the sorting destination are associated with each other (for example, a table in which an address and a tray of the sorting pocket 4 are associated with each other). The acquisition unit 121 searches the destination DB 122 to acquire sorting destination information indicating the sorting destination corresponding to the identification information 10 acquired from the output unit 101.

The external search unit 123 is a search engine capable of performing a search using text data as a keyword and extracting predetermined information. In a case where the identification information 10 is text data, the acquisition unit 121 extracts predetermined information from the external search unit 123 by using the text data acquired from the output unit 101 as a keyword, and treats the extracted information as sorting destination information.

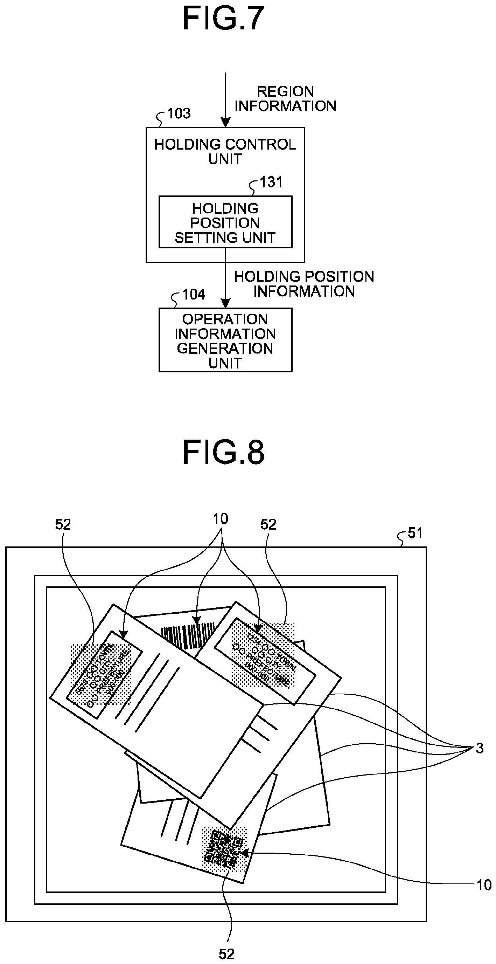

FIG. 7 is a block diagram illustrating an example of a specific functional configuration of the holding control unit 103 according to the embodiment. The holding control unit 103 illustrated in FIG. 7 includes a holding position setting unit 131.

The holding position setting unit 131 sets a holding position within the identification region on the basis of the region information acquired from the output unit 101.

FIG. 8 is a diagram illustrating a first example of the identification region 52 according to the embodiment. The identification region 52 illustrated in FIG. 8 has a rectangular shape that is set to include the entire identification information 10 for each piece of the identification information 10. Each side of the identification region 52 according to the present example is parallel to each corresponding side of the box image 51.

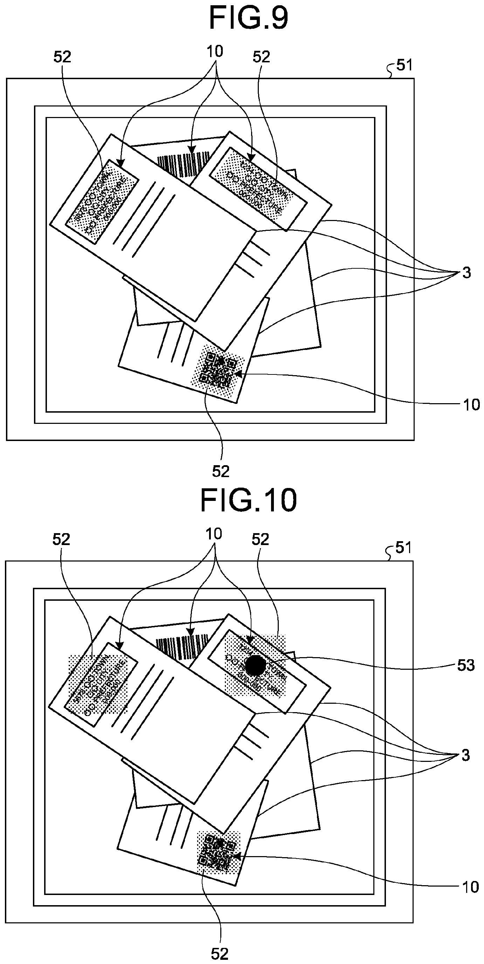

FIG. 9 is a diagram illustrating a second example of the identification region 52 according to the embodiment. As in the first example illustrated in FIG. 8, the identification region 52 illustrated in FIG. 9 has a rectangular shape that is set to include the entire identification information 10 for each piece of the identification information 10. However, each side of the identification region 52 illustrated in FIG. 9 is inclined along the region where the identification information 10 exists. With this setting, it is possible to reduce the proportion of regions other than the identification information 10 included in the identification region 52.

Note that the method of setting the identification region 52 is not limited to the above-described example. The identification region 52 may be formed with, for example, a polygonal shape other than a rectangular shape, a circular shape, a free curve, or others.

The holding position setting unit 131 sets a holding position (a position at which the holding mechanism 21 holds the package 3) within the identification region 52 as described above. The holding position setting unit 131 sets, for example, a substantial surface gravity center or a substantial center of the identification region 52, as the holding position. The holding position setting unit 131 outputs holding position information indicating the holding position to the operation information generation unit 104.

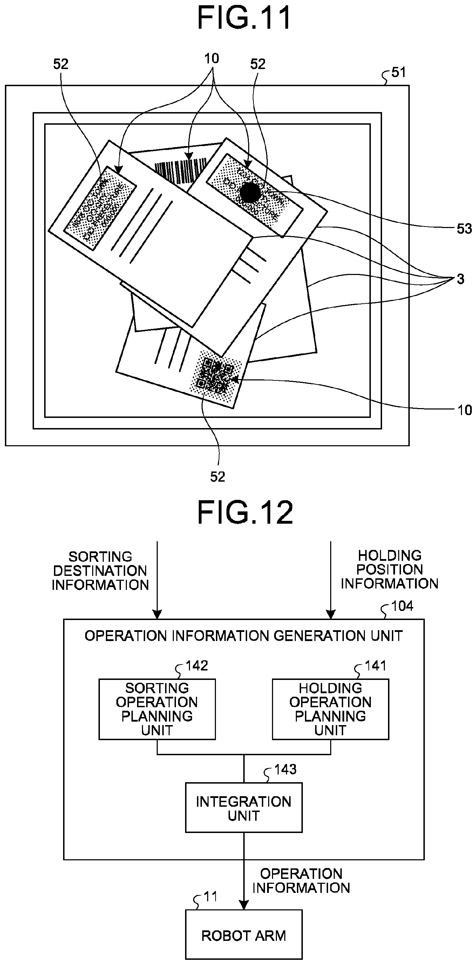

FIG. 10 is a diagram illustrating a first example of a holding position 53 according to the embodiment. FIG. 11 is a diagram illustrating a second example of the holding position 53 according to the embodiment. The holding position 53 illustrated in FIG. 10 corresponds to the identification region 52 illustrated in FIG. 8. The holding position 53 illustrated in FIG. 11 corresponds to the identification region 52 illustrated in FIG. 9.

As described above, the holding position 53 is set within the identification region 52, so that the package 3 can be reliably held even when the shape of the package 3 itself cannot be recognized.

FIG. 12 is a block diagram illustrating an example of a specific functional configuration of the operation information generation unit 104 according to the embodiment. The operation information generation unit 104 illustrated in FIG. 12 includes a holding operation planning unit 141, a sorting operation planning unit 142, and an integration unit 143.

The holding operation planning unit 141 plans a holding operation, which is an operation until the robot arm 11 holds the package 3, on the basis of the holding position information acquired from the holding control unit 103. The holding operation includes an operation of moving the arm mechanism 22 so as to move the holding mechanism 21 to the holding position 53, an operation of holding the package 3 by the holding mechanism 21 that has reached the holding position 53 (by making the inside of the suction pad negative pressure), and so forth.

The sorting operation planning unit 142 plans a sorting operation, which is an operation of moving the package 3 to the sorting destination by the robot arm 11, on the basis of the sorting destination information acquired from the sorting destination specifying unit 102. The sorting operation includes an operation of moving the arm mechanism 22 so as to move the holding mechanism 21 holding the package 3 from the holding position 53 to a sorting destination (for instance, a specific tray in the sorting pocket 4), an operation of causing the holding mechanism 21 that has reached the sorting destination to release the package 3 (by releasing the negative pressure in the suction pad), and so forth.

The integration unit 143 integrates the holding operation planned by the holding operation planning unit 141 and the sorting operation planned by the sorting operation planning unit 142, and then generates operation information indicating an overall operation plan of the robot arm 11. The integration unit 143 outputs the operation information to the robot arm 11 (drive control mechanism 24).

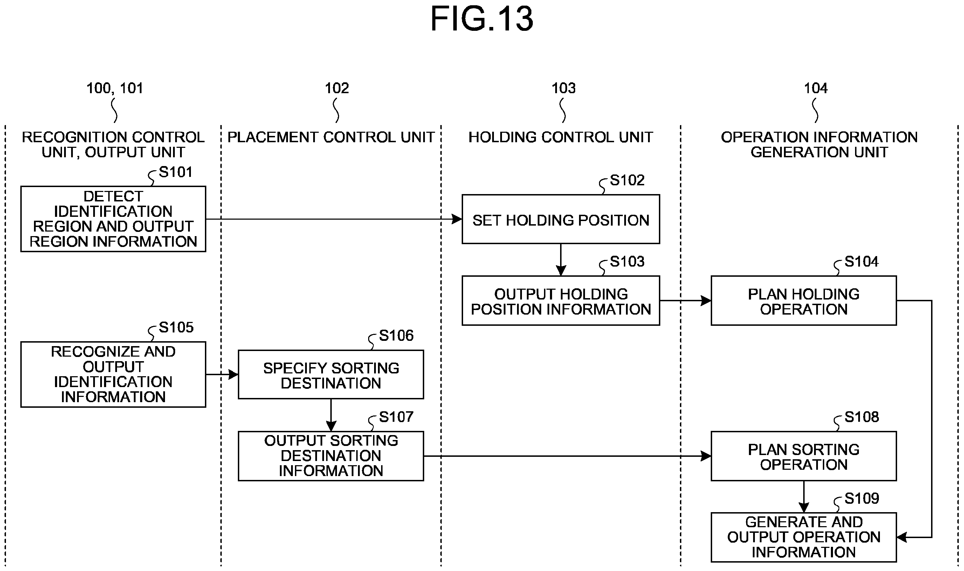

FIG. 13 is a sequence diagram illustrating an example of a processing flow in the control device 13 according to the embodiment. Upon detecting the identification region 52 by the recognition control unit 100 and outputting the region information by the output unit 101 (S101), the holding control unit 103 sets the holding position 53 on the basis of the region information (S102) and outputs, to the operation information generation unit 104, the holding position information indicating the holding position 53 (S103). The operation information generation unit 104 plans a holding operation based on the acquired holding position information (S104). Upon recognizing the identification information 10 by the recognition control unit 100 and outputting the identification information 10 by the output unit 101 (S105), the placement control unit 102 specifies a sorting destination corresponding to the identification information 10 (S106) and outputs, to the operation information generation unit 104, sorting destination information indicating the sorting destination (S107). The operation information generation unit 104 plans a sorting operation based on the acquired sorting destination information (S108). The operation information generation unit 104 then generates operation information indicating a comprehensive operation plan in which the holding operation and the sorting operation are integrated, and outputs the operation information to the drive control mechanism 24 of the robot arm 11 (S 109).

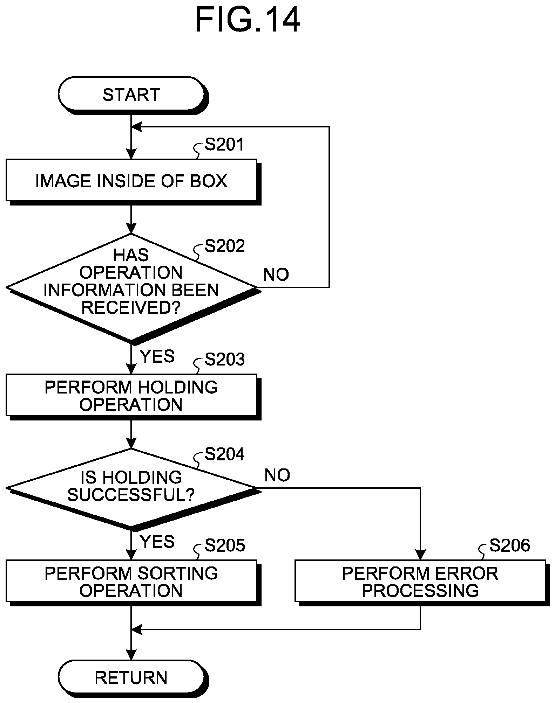

FIG. 14 is a flowchart illustrating an example of a processing flow in the sorting system 1 according to the embodiment. Upon imaging the inside of the box 2 (that is, acquiring the box image 51) by the camera 12 (S201), the drive control mechanism 24 determines whether or not operation information has been received from the control device 13 (S202). In a case where the drive control mechanism 24 has not received the operation information (S202: No), the camera 12 continues imaging (S201), in other words, the drive control mechanism 24 waits for reception of the operation information. In a case where the drive control mechanism 24 has received the operation information (S202: Yes), the drive control mechanism causes the robot arm 11 to perform a holding operation (S203). The drive control mechanism 24 then determines whether or not the holding of the package 3 by the holding mechanism 21 is successful (S204). The determination in step S204 can be performed on the basis of, for example, a detection result by the contact sensor 23. In a case where the holding is successful (S204: Yes), the drive control mechanism 24 subsequently causes the robot arm 11 to perform a sorting operation (S205). In a case where the holding is not successful (S204: No), the drive control mechanism 24 performs error processing (S206). The error processing is processing for avoiding a problem caused by a failure in holding the package 3. Details of the error processing is not be particularly limited, but may be, for example, a notification to an administrator, a stop of the system, or a re-execution of the holding operation.

A computer program for implementing various functions in the control device 13 according to the above-described embodiment can be provided by being recorded in a computer-readable recording medium such as a compact disc (CD) -ROM, a flexible disk (FD), a CD-recordable (CD-R), or a digital versatile disk (DVD) as a file in an installable format or an executable format. The computer program may be provided or distributed via a network such as the Internet.

Note that, in the above embodiment, the configuration is exemplified, in which the control device 13 and the drive control mechanism 24 are separately provided. However, the configuration may be implemented such that the control device 13 and the drive control mechanism 24 are integrated as one body.

Moreover, in the above-described embodiment, the configuration is exemplified, in which one robot arm 11 is controlled by one control device 13, but is not limited thereto. For example, a plurality of robot arms 11 may be controlled by one control device 13.

As described above, according to the present embodiment, the holding position 53 is set on the basis of the position of the identification information 10, so that an appropriate holding operation can be implemented regardless of the shape of the package 3 itself. Thus, it is possible to provide the sorting system 1 with high reliability.

While the embodiments and modifications of the present invention have been described above, the above-described embodiments and modifications have been presented by way of example only, and are not intended to limit the scope of the invention. The above-described novel embodiments and modifications may be implemented in various other forms, and various omissions, substitutions and changes may be made without departing from the gist of the invention. The above-described embodiments and modifications are included in the scope and gist of the invention, and are also included in the invention described in the claims and the scope equivalent thereto.

### EXPLANATIONS OF LETTERS OR NUMERALS

1: Sorting System, 2: Box, 3: Package (Object), 4: Sorting Pocket, 10: Identification Information, 11: Robot Arm (Load Handling Device), 12: Camera (Imaging Device), 13: Control Device (Information Processing Device), 14: Network, 21: Holding Mechanism, 22: Arm Mechanism, 23: Contact Sensor, 24: Drive Control Mechanism, 31: CPU, 32: RAM, 33: ROM, 34: Auxiliary Storage Device, 35: Communication I/F (Connection Unit), 36: User I/F, 37: Bus, 51: Box Image, 52: Identification Region, 53: Holding Position, 100: Recognition Control Unit, 101: Output Unit, 102: Placement Control Unit, 103: Holding Control Unit, 104: Operation Information Generation Unit, 111: OCR Processing Unit, 112: Barcode Reading Unit, 113: Two-dimensional Code Reading Unit, 114: Identification Information Acquisition Unit, 115: Region Information Acquisition Unit, 121: Acquisition Unit, 122: Destination DB, 123: External Search Unit, 131: Holding Position Setting Unit, 141: Holding Operation Planning Unit, 142: Sorting Operation Planning Unit, 143: Integration Unit

## Claims

1. An information processing device comprising:
a connection unit configured to connect to an imaging device, the imaging device imaging a region on which an object to be handled by using a load handling device is placed;
a recognition control unit configured to
acquire image information about the region via the connection unit,
detect, from the image information, an identification region in which identification information attached to the object is included, and
recognize the identification information in the identification region; and
an output unit configured to output
region information related to the identification region detected by the recognition control unit, and
the identification information recognized by the recognition control unit.

2. The information processing device according to claim 1, further comprising a holding control unit configured to
acquire the region information from the output unit, and
set a holding position at which the load handling device holds the object, the holding position being set within the identification region on the basis of the region information.

3. The information processing device according to claim 1 or 2, further comprising a placement control unit configured to
acquire the identification information from the output unit, and
set, on the basis of the identification information, a sorting destination on which the object held by the load handling device is to be placed.

4. The information processing device according to any one of claims 1 to 3, wherein
the recognition control unit is configured to calculate a position of the identification region in the region, and
the region information includes information indicating the position of the identification region calculated by the recognition control unit.

5. The information processing device according to claim 2, wherein the holding control unit is configured to set the holding position at a substantial surface gravity center or a substantial center of the identification region.

6. The information processing device according to any one of claims 1 to 5, wherein
the identification information includes a character string, and
the recognition control unit is configured to recognize the identification information by OCR processing.

7. The information processing device according to any one of claims 1 to 5, wherein the identification information includes a barcode or a two-dimensional code, and the recognition control unit is configured to recognize the identification information.

8. A sorting system comprising:
a load handling device;
an imaging device configured to image a region on which an object to be handled by using the load handling device is placed; and
an information processing device configured to control the load handling device, wherein
the information processing device includes:
a connection unit configured to connect to the imaging device;
a recognition control unit configured to
acquire image information about the region via the connection unit,
detect, from the image information, an identification region in which identification information attached to the object is included, and
recognize the identification information in the identification region; and
an output unit configured to output
region information related to the identification region detected by the recognition control unit, and
the identification information recognized by the recognition control unit.

9. A program causing a computer to execute processing, the processing comprising:
acquiring, from an imaging device, image information about a region on which an object to be handled by using a load handling device is placed, the imaging device imaging the region via a connection unit which connects to the imaging device;
detecting, from the image information, an identification region in which identification information attached to the object is included;
recognizing the identification information in the identification region; and
outputting information about the detected identification region and outputting the recognized identification information.
